# EUROPÄISCHE PATENTSCHRIFT

(11) **EP 1 079 105 B1**
(45) Veröffentlichungstag und Bekanntmachung des Hinweises auf die Patenterteilung: **06.06.2007**
(21) Anmeldenummer: 99116678.6
(22) Anmeldetag: 26.08.1999
(51) Int. Cl.: F03G 7/06

(54) **Einrichtung für einen Stellantrieb**
Apparatus for an actuator
Appareil pour un actionneur

(43) Veröffentlichungstag der Anmeldung: 28.02.2001
(73) Patentinhaber: Siemens Schweiz AG, 8047 Zürich (CH)
(72) Erfinder: Studer, Werner, 6315 Oberägeri (CH); Lechner, Hubert, 6300 Zug (CH)
(74) Vertreter: Weise, Wolfgang

(56) Entgegenhaltungen:
- EP-A- 0 310 439
- EP-A- 0 326 997
- EP-A- 0 764 752
- PATENT ABSTRACTS OF JAPAN vol. 010, no. 092 (M-468), 9. April 1986 (1986-04-09) & JP 60 230568 A (DAIDO TOKUSHUKO KK), 16. November 1985 (1985-11-16)

## Beschreibung

Die Erfindung bezieht sich auf eine Einrichtung gemäss dem Oberbegriff des Anspruchs 1.

Solche Einrichtungen eignen sich beispielsweise zur sicheren Verriegelung einer durch einen Stellantrieb betätigbaren Klappe in der Heizungs-, Lüftungs- und Klimatechnik im Falle eines Brandes.

Stellantriebe zum Betätigen von Luftklappen in der Heizungs-, Lüftungs- und Klimatechnik sind beispielsweise aus dem Datenblatt CM2N4613D der Firma Siemens Building Technologies bekannt.

Es ist auch bekannt (EP 326 997 A2), in einem Stellantrieb eine sogenannte Formgedächtnislegierung zur Generierung einer Stellbewegung einzusetzen. In EP 764 752 A wird ferner eine elektrisch aktivierbare Klemmvorrichtung für ein Stellglied vorgeschlagen, welche beispielsweise piezoelektrische, magnetostriktive oder Shape-Memory Materialien zur Auslösung einer Klemmwirkung nutzen.

Bekannte Stellantriebe haben in einem Brandfall den Nachteil, dass ein durch den Stellantrieb betätigtes Stellglied bei sehr hohen Temperaturen eine undefinierte Stellposition einnehmen kann, wenn etwa Kunststoffteile oder andere bei hohen Temperaturen verformbare Teile des Stellantriebs deformiert werden.

Der Erfindung liegt die Aufgabe zugrunde, eine Einrichtung zu schaffen, durch welche ein durch einen Stellantrieb betätigtes Stellglied auch bei sehr hohen Temperaturen mit hoher Sicherheit eine definierte Stellposition einnimmt.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine Einrichtung zur Blockierung einer Stellbewegung,
- Fig. 2: die Einrichtung zur Blockierung einer Stellbewegung mit einem Stellantrieb und Teilen eines Stellgliedes, und
- Fig. 3: zwei verschiedene Zustände der Einrichtung.

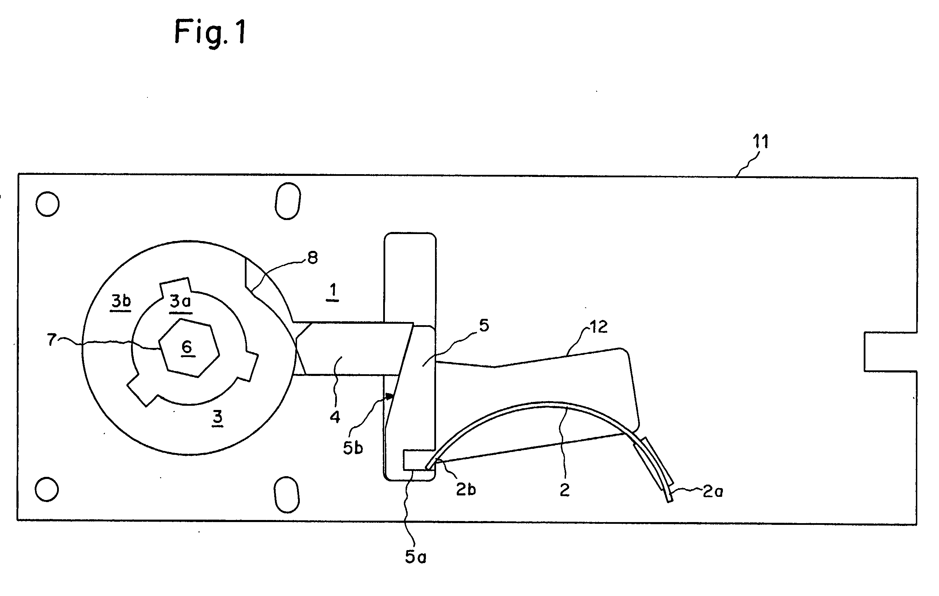

In der Fig. 1 ist mit 1 ein thermisch auslösbarer Verriegelungsmechanismus bezeichnet, durch den eine Stellbewegung eines Stellgliedes blockierbar ist. In einer beispielhaften Ausführung weist der Verriegelungsmechanismus 1 ein thermisches Antriebselement 2, ein Blockierrad 3, einen Blockierfinger 4 und einen Schieber 5 auf. In der Fig. 1 ist das thermische Antriebselement 2 in einem Ausgangszustand dargestellt, in dem das Stellglied nicht blockiert ist.

Mit Vorteil ist das thermische Antriebselement 2 aus einer geeigneten Formgedächtnislegierung gefertigt. Eigenschaften und Abstimmungsmöglichkeiten von Formgedächnislegierungen sind allgemein bekannt, wobei für Formgedächtnislegierungen oft auch der englische Begriff Shape-Memory-Alloy oder dessen Abkürzung SMA verwendet wird.

Das Blockierrad 3 ist mit Vorteil formschlüssig mit einer Stellachse 6 des Stellgliedes verbunden. Die besagte formschlüssige Verbindung ist beispielhaft mit einem der Querschnittsform der Stellachse 6 angepassten Loch 7 realisierbar, welches zentrisch im Blockierrad 3 ausgenommen ist.

Der äussere Rand des Blockierrades 3 ist derart ausgebildet, dass das Blockierrad 3 und damit die Stellachse 6 durch den vom Schieber 5 gegen das Blockierrad 3 gepressten Blockierfinger 4 in einer gewissen Positionswinkel der Stellachse 6 festhaltbar ist. Beispielhaft weist der äussere Rand des Blockierrades 3 eine Einbuchtung 8 auf, durch welche das Blockierrad 3 vom angepressten Blockierfinger 4 im verlangten Positionswinkel festgehalten wird.

In einer vorteilhaften Variante weist das Blockierrad 3 eine erste Scheibe 3a und eine zweite Scheibe 3b auf, wobei die erste Scheibe 3a einerseits formschlüssig mit der Stellachse 6 und andrerseits formschlüssig mit der zweiten Scheibe 3b verbunden ist. Die Einbuchtung 8 ist in der besagten Variante an der Scheibe 3b ausgebildet. Die Ausführung des Blockierrades 3 mit den beiden Scheiben 3a und 3b bringt den Vorteil, dass die zweite Scheibe 3b mit dem Loch 7 je nach Achsquerschnitt der Stellachse 6 wählbar ist; auf diese Weise ist der Verriegelungsmechanismus kostengünstig und mit geringem Montageaufwand auf verschiedenartige marktübliche Ausführungen der Stellachse 6 anpassbar. Bei Bedarf kann die auf die Stellachse 6 passende zweite Scheibe 3b vor Ort ausgewählt und eingesetzt werden.

Hohe Zuverlässigkeit bei geringen Fertigungs- und Montagekosten ist beispielhaft durch die Verwendung einer Führungsplatte 11 erreichbar, welche eine Ausnehmung 12 zur Aufnahme und/oder Führung des thermischen Antriebselementes 2, des Blockierrads 3, des Blockierfingers 4 und des Schiebers 5 aufweist.

Das thermische Antriebselement 2 wird an einem ersten Endbereich 2a vorteilhafterweise durch die Führungsplatte 11 fixiert, indem die Ausnehmung 12 auf die Form des Antriebselementes 2 abgestimmt ist. Weiter sind das Antriebselement 2 und der Schieber 5 durch die Ausnehmung 12 derart angeordnet und geführt, dass der Schieber 5 durch den thermischen Antrieb 2 bewegbar ist. Mit Vorteil sind das Antriebselement 2 und der Schieber 5 miteinander formschlüssig verbunden. Ein Formschluss zwischen dem thermischen Antriebselement 2 und dem Schieber 5 wird beispielhaft durch eine im Schieber 5 ausgeführte Nut 5a ermöglicht, in der das Antriebselement 2 mit dem zweiten Endberich 2b eingreift.

Mit Vorteil weist der Schieber 5 eine Neigung 5b auf, durch welche der Blockierfinger 4 dann gegen das Blockierrad 3 hin verschiebbar ist, wenn der Schieber 5 durch den thermischen Antrieb 2 ausgelenkt wird.

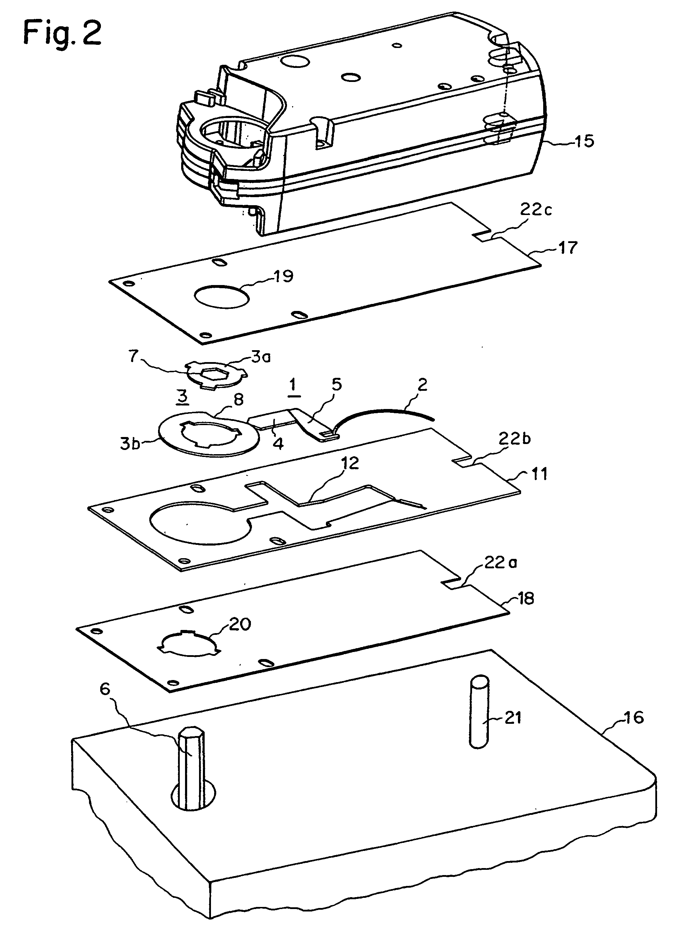

Zur Verdeutlichung ist die erfindungsgemässe Einrichtung in der Fig. 2 zusammen mit einem Stellantrieb 15 und einem aus Gründen der Vereinfachung nur teilweise sichtbaren Stellglied 16 dargestellt. Das Stellglied 6 wird durch die Stellachse 16 betätigt und ist typischerweise eine Lüftungsklappe, ein Schieber, Ventil oder eine Türe. Ein Drehen der Stellachse bewirkt je nach Drehsinn eine Vergrösserung oder eine Verminderung des Volumenstromes durch das Stellglied 6. Grundsätzlich ist der Verrigelungsmechanismus 1 ganz allgemein für Stellglieder von gasförmigen oder flüssigen Medien anwendbar.

Beispielhaft ist der durch die Führungsplatte 11 in einer Ebene geführte Verriegelungsmechanismus 1 zwischen einem oberen Abdeckblech 17 und einem unteren Abdeckblech 18 abgeordnet, wobei das obere Abdeckblech 17 ein Durchgangsloch 19 und das untere Abdeckblech 18 ein weiteres Durchgangsloch 20 zur Durchführung der Stellachse 6 aufweisen.

Die beiden Abdeckbleche 17 und 18 sind mit der Führungsplatte durch eine bekannte Verbindungstechnik, beispielsweise durch Nieten oder Schrauben, je nach Anforderung lösbar oder nicht lösbar verbunden.

Ein weiterer Vorteil ist erreichbar, wenn das Durchgangsloch 20 des unteren Abdeckblechs derart ausgestaltet ist, dass die erste Scheibe 3a auch dann auswechselbar ist, wenn der Verriegelungsmechanismus 1 mit der Führungsplatte 11 und den beiden Abdeckblechen 17 und 18 zu einer Funktionseinheit verbunden sind. Der besagte Vorteil liegt darin, dass die Funktionseinheit in montiertem Zustand im vorgesehenen Rahmen an Mass und Gestalt der Stellachse 6 anpassbar ist.

Es versteht sich von selbst, dass Mittel vorzusehen sind, durch welche ein Verdrehen des Verriegelungsmechanismus 1 gegenüber dem Stellglied 16 verhindert wird. Das Verdrehen wird beispielhaft durch einen am Stellglied 16 angeordneten Bolzen 21 verhindert, der durch Aussparungen 22 a, 22b und 22c geführt ist, welche am unteren Abdeckblech 18 bzw. an der Führungsplatte 11 und am oberen Abdeckblech 17 ausgebildet sind.

In der Regel ist der Bolzen 21 - oder ein entspechendes Sicherungsmittel - am Stellglied 16 bereits vorhanden, wo er ein gegenseitiges Verdrehen von Stellantrieb 15 und Stellglied 16 verhindert.

Das Blockierrad 3, der Blockierfinger 4, der Schieber 5, die Führungsplatte 11 und die beiden Abdeckbleche 17 und 18 sind aus einem Material gefertigt, dessen Schmelzpunkt anwendungsgerecht entsprechend hoch ist. Mit Vorteil werden das Blockierrad 3, der Blockierfinger 4, der Schieber 5, die Führungsplatte 11 und die beiden Abdeckbleche 17 und 18 aus Stahl gefertigt, wobei vorteilhafterweise auch ein Korrosionsschutz - beispielsweise durch Verzinken - aufgetragen wird.

Der Verriegelungsmechanismus 1 ist temperaturabhängig und funktioniert wie folgt:

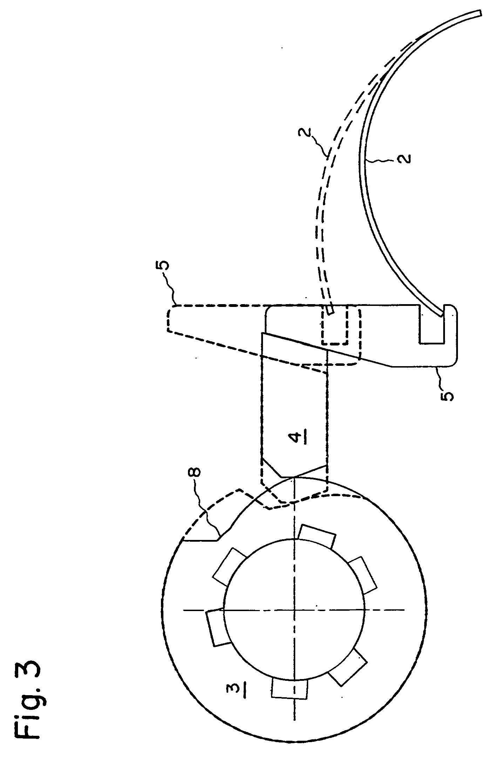

Unter der Voraussetzung, dass die Umgebungstemperatur des Verriegelungsmechanismus 1 stets unterhalb einer ersten Temperaturschwelle war, wird das Stellglied 16 entsprechend der Bewegung des Stellantriebs 15 geöffnet oder geschlossen, was dem normalen Betriebszustand entspricht. Im besagten normalen Betriebszustand sind das thermische Antriebselement 2 und der Schieber 5 in der in der Fig. 3 mit durchgezogenen Linien dargestellten Lage; das Blockierrad ist also mit der Stellachse 6 entsprechend den Bewegungen des Stellglieds 16 bewegbar.

Oberhalb einer ersten Temperaturschwelle, welche typischerweise bei etwa 50 °C liegt, wird mit Vorteil die elektrische Energieversorgung des Stellantriebs 15 selbsttätig abgestellt, worauf der Stellantrieb 15 selbsttätig - beispielsweise durch eine Rückstellfeder - in eine Notstellung positioniert. In der Notstellung des Stellantriebs 15 ist das Blockierrad 3 derart positioniert, dass es durch den auf das Blockierrad 3 gedrückten Blockierfinger 4 blockiert würde. Da jedoch das thermische Antriebselement 2 und der Schieber 5 im Bereich der ersten Temperaturschwelle in der in Fig. 3 mit durchgezogenen Linien dargestellten Lage positioniert sind, wird das Stellglied 16 vom Verriegelungsmechanismus 1 nicht blockiert.

Oberhalb einer zweiten Temperaturschwelle, welche typischerweise bei etwa 70 °C liegt, verändert sich die Form des thermischen Antriebselements 2 aufgrund des Formgedächtniseffekts derart, dass der Schieber 5 verschoben und das Blockierrad 3 durch den Blockierfinger 4 in der Notstellung blockiert und verriegelt wird. Die Form des thermischen Antriebselements 2 und die Lage des Schiebers 5 sowie die Lage des Blockierfingers 4 bei blockierter und verriegelter Notstellung des Blockierrades 3 sind in der Fig. 3 gestrichelt eingezeichnet. Da das Blockierrad 3 und die Stellachse 6 des Stellglieds 16 mechanisch miteinander gekoppelt sind, ist auch das Stellglied 16 in der Notstellung blockiert und verriegelt.

Die hier angegebenen Werte für die beiden Temperaturschwellen sind in weiten Grenzen den konkreten Anforderungen anpassbar und richten sich in der Regel an geltende Sicherheitsnormen.

Mit Vorteil ist das thermische Antriebselement so vorbereitet, dass die Formänderung, welche sich beim Überschreiten der zweiten Temperaturschwelle einstellt, einmalig und nicht umkehrbar ist. Dadurch, dass der Blockierfinger 4 zur Blockierung des Blockierrades 3 über die Neigung 5b des Schiebers bewegt wird, ist die Blockierung auch bei grossen Drehmomenten der Stellachse 6, welche allenfalls in einer unkontrollierten Situation - beispielsweise in einem Brandfall - der Blockierung entgegenwirken könnten, sicher und selbsthemmend verriegelt.

Im dargestellten Ausführungsbeispiel ist das thermische Antriebselement 2 als länglicher Stab oder als Band ausgeführt. Es versteht sich von selbst, dass der Verriegelungsmechanismus 1 gemäss der vorliegenden Erfindung auch dann realisierbar ist, wenn das Antriebselement 2 in weiteren Ausführungsvarianten beispielsweise die Geometrie einer Spiralfeder oder eines Drahtes aufweist. Im weiteren ist der Schieber 5 zur Blockierung des Blockierrades 3 in Varianten der Erfindung grundsätzlich durch Zug- oder durch Druckkraft verschiebbar, wobei naheliegenderweise das thermische Antriebselement 2 und der Schieber 5 entsprechend aufeinander abzustimmen sind.

Mit Vorteil wird der Rand des Blockierrades 3 derart ausgebildet, dass der erforderliche Toleranzbereich des Positionswinkels, in dem das Blockierrad 3 festzuhalten ist, sicher eingehalten werden kann. Beispielhaft ist ein gewisser Toleranzbereich erreichbar, indem die Einbuchtung 8 in einem entsprechend grossen Positionswinkelbereich ausgeführt ist, so dass in der Notstellung des Blockierrads 3 der Blockierfinger 4 mit Sicherheit in der Einbuchtung 8 eingreifen kann.

Je nach Bedarf kann der Verriegelungsmechanismus 1 entweder als Ergänzungseinheit zu einem herkömmlichen Stellantrieb eingesetzt oder direkt in einem Stellantrieb eingebaut werden.

## Patentansprüche

1. Einrichtung mit einem thermisch auslösbaren Antriebselement (2) zur Blockierung einer Stellbewegung einer Stellachse (6), **dadurch gekennzeichnet,**
**dass** die Einrichtung ein mit der Stellachse (6) mechanisch koppelbares Blockierrad (3) und einen durch das thermisch auslösbare Antriebselement (2) betätigbaren Blockierfinger (4) aufweist,
wobei das Blockierrad (3) und der Blockierfinger (4) derart angeordnet und ausgestaltet sind, dass bei einem bestimmten Positionswinkel der Stellachse (6) das Blockierrad (3) durch den Blockierfinger (4) festgehalten wird.

2. Einrichtung nach einem vorangehenden Anspruch, **dadurch gekennzeichnet,**
**dass** das thermisch auslösbare Antriebselement (2) aus einer Formgedächtnislegierung verwirklicht ist.

3. Einrichtung nach einem vorangehenden Anspruch, **dadurch gekennzeichnet,**
**dass** die Blockierung nach der thermischen Auslösung nicht selbsttätig lösbar ist.

4. Einrichtung nach einem vorangehenden Anspruch, **gekennzeichnet durch**
einen Schieber (5) mit einer Neigung (5b), der **durch** das thermische Antriebselement (2) derart verschiebbar ist, dass der Blockierfinger (4) **durch** die Neigung (5b) des Schiebers (5) betätigbar ist.

5. Einrichtung nach einem vorangehenden Anspruch, **gekennzeichnet durch**
eine Führungsplatte (11) mit einer Ausnehmung (12) zur Aufnahme und/oder Führung des thermischen Antriebselementes (2), des Blockierrads (3), des Blockierfingers (4) und des Schiebers (5).

6. Einrichtung nach einem vorangehenden Anspruch, **dadurch gekennzeichnet,**
**dass** das Blockierrad (3) formschlüssig mit der Stellachse (6) verbindbar ist.

7. Einrichtung nach einem vorangehenden Anspruch, **dadurch gekennzeichnet,**
**dass** das Blockierrad (3) zwei konzentrisch angeordnete und formschlüssig ineinandergreifende Scheiben (3a, 3b) aufweist.

8. Einrichtung nach einem vorangehenden Anspruch, **dadurch gekennzeichnet,**
**dass** die Führungsplatte (11), das thermische Antriebselement (2), das Blockierrad (3), der Blockierfinger (4) und der Schieber (5) zwischen einem oberen Abdeckblech (17) und einem unteren Abdeckblech (18) angeordnet sind.

## Claims

1. Apparatus having a thermally triggerable drive element (2) for blocking an actuation of a regulating axis (6),
**characterised in that**
the apparatus comprises a blocking wheel (3) which can be mechanically coupled to the regulating axis (6) and a blocking finger (4) which can be activated by means of the thermally triggerable drive element (2),
with the blocking wheel (3) and the blocking finger (4) being arranged and embodied such that with a certain position angle of the regulating axis (6), the blocking wheel (3) is retained by means of the blocking finger (4).

2. Apparatus according to one of the preceding claims,
**characterised in that**
the thermally triggerable drive element (2) is realised from a shape memory alloy.

3. Apparatus according to one of the preceding claims,
**characterised in that**
the blocking is not automatically detachable following the thermal triggering.

4. Apparatus according to one of the preceding claims,
**characterised by**
a slider (5) having an incline (5b) which can be moved by means of the thermal drive element (2) such that the blocking finger (4) can be activated by the incline (5b) of the slider (5).

5. Apparatus according to one of the preceding claims,
**characterised by**
a guide plate (11) having a recess (12) for accommodating and/or guiding the thermal drive element (2), the blocking wheel (3), the blocking finger (4) and the slider (5).

6. Apparatus according to one of the preceding claims,
**characterised in that**
the blocking wheel (3) can be connected to the regulating axis (6) in a form-fitting manner.

7. Apparatus according to one of the preceding claims,
**characterised in that**
the blocking wheel (3) comprises two plates which are arranged concentrically and interlock with one another in a form fitting manner.

8. Apparatus according to one of the preceding claims,
**characterised in that**
the guide plate(11), the thermal drive element (2), the blocking wheel (3), the blocking finger (4) and the slider (5) are arranged between an upper cover sheet (17) and a lower cover sheet (18).

## Revendications

1. Dispositif comprenant un élément d'entraînement (2) pouvant être déclenché thermiquement, destiné au blocage d'un mouvement de réglage d'un axe de réglage (6), **caractérisé**
**en ce que** le dispositif présente une roue de blocage (3) pouvant être couplée mécaniquement avec l'axe de réglage (6) et un doigt de blocage (4) actionnable au moyen de l'élément d'entraînement (2) pouvant être déclenché thermiquement,
la roue de blocage (3) et le doigt de blocage (4) étant disposés et exécutés de telle manière que, dans un angle de position déterminé de l'axe de réglage (6), la roue de blocage (3) est fixée par le doigt de blocage (4).

2. Dispositif selon une revendication quelconque précédente,
**caractérisé**
**en ce que** l'élément d'entraînement (2) pouvant être déclenché thermiquement est réalisé à partir d'un alliage à mémoire de forme.

3. Dispositif selon une revendication quelconque précédente,
**caractérisé**
**en ce que** le blocage n'est pas automatiquement amovible après le déclenchement thermique.

4. Dispositif selon une revendication quelconque précédente,
**caractérisé**
**par** une targette (5) ayant une inclinaison (5b), qui peut coulisser de telle manière au moyen de l'élément d'entraînement thermique que le doigt de blocage (4) peut être actionné en raison de l'inclinaison (5b) de la targette (5).

5. Dispositif selon une revendication quelconque précédente,
**caractérisé**
**par** une plaque de guidage (11) comprenant un évidement (12) destiné au logement et/ou au guidage de l'élément d'entraînement thermique (2), de la roue de blocage (3), du doigt de blocage (4) et de la targette (5).

6. Dispositif selon une revendication quelconque précédente,
**caractérisé**
**en ce que** la roue de blocage (3) est raccordable à l'axe de réglage (6) par adhérence de forme.

7. Dispositif selon une revendication quelconque précédente,
**caractérisé**
**en ce que** la roue de blocage (3) présente deux disques (3a, 3b) disposés concentriquement et ayant prise l'un dans l'autre par adhérence de forme.

8. Dispositif selon une revendication quelconque précédente,
**caractérisé**
**en ce que** la plaque de guidage (11), l'élément d'entraînement thermique (2), la roue de blocage (3), le doigt de blocage (4) et la targette (5) sont disposés entre une tôle de recouvrement supérieure (17) et une tôle de recouvrement inférieure (18).
